# EUROPÄISCHE PATENTSCHRIFT

(11) **EP 2 805 594 B1**
(45) Veröffentlichungstag und Bekanntmachung des Hinweises auf die Patenterteilung: **12.07.2017**
(21) Anmeldenummer: 14168667.5
(22) Anmeldetag: 16.05.2014
(51) Int. Cl.: A01C 5/06, A01C 7/06, A01C 7/20, A01C 7/04

(54) **Sämaschine**
Seeder
Semoir

(30) Priorität: 24.05.2013 DE 102013008868
(43) Veröffentlichungstag der Anmeldung: 26.11.2014
(73) Patentinhaber: PÖTTINGER Landtechnik GmbH, 4710 Grieskirchen (AT)
(72) Erfinder: Preimess, Hans-Jörg, 4710 Grieskirchen (AT); Schürz, Christoph, 4600 Wels (AT); Kirchmayr, Alois, 4073 Wilhering (AT)
(74) Vertreter: Thoma, Michael

(56) Entgegenhaltungen:
- DE-A1-102007 036 662
- GB-A- 191 021 208
- US-A- 2 106 901
- US-A- 2 341 795
- US-A1- 2010 107 941
- US-A1- 2011 232 552

## Beschreibung

Die vorliegende Erfindung betrifft eine Sämaschine mit zumindest einer Reihe von Ausbringelementen, die jeweils einen Scharkörper zum Einbringen einer Särille in den Boden umfassen, wobei zu zumindest einigen der Ausbringelementen jeweils zumindest zwei separate Saatgutleitungen führen, von denen eine erste Saatgutleitung mit Drillsaatgut und/oder Dünger und eine zweite Saatgutleitung mit Einzelkornsaatgut beschickbar ist.

Eine Sämaschine nach dem Oberbegriff des Anspruchs 1 ist aus der Schrift DE 10 2007 036 662 A1 bekannt. Weitere Sämaschinen mit zwei separaten Saatgutleitungen zu einem gemeinsamen Ausbringelement zeigen ferner die Schriften US 2011/232552 A1, US 2010/107941 A1, GB 21208 A, US 23 41 795 A und US 21 06 901.

Bei herkömmlichen Einzelkornsämaschinen, mit denen hinsichtlich des Pflanzabstandes kritisches Saatgut wie Mais, Soja oder Sonnenblumen in Einzelkornablage ausgebracht wird, ist ein Körnervereinzelungsaggregat oftmals unmittelbar an den Ausbringelementen angeordnet, um die abzulegenden Körner unmittelbar vor deren Ablage zu vereinzeln, um nicht nur einen Reihenabstand, sondern auch eine Längsbeabstandung der einzelnen Körner exakt einhalten zu können. Solche unmittelbar an den Ausbringelementen vorgesehene Körnervereinzelungsvorrichtungen sind jedoch mit verschiedenen Nachteilen behaftet, insbesondere dem hohen Platzbedarf im Bereich der Ausbringelemente, der einer engen Reihenbeabstandung der Ausbringelemente entgegensteht. Dies ist insbesondere bei kombinierten Drillsaat- und Einzelkornsämaschinen von Nachteil, die aus verschiedenen Speicherbehältern gleichermaßen Einzelkornsaatgut und Drillsaatgut bzw. Saatgut und Dünger ausbringen können und hierfür eine entsprechend hohe Anzahl von Ausbringelementen aufweisen.

Insofern wurde es bereits vorgeschlagen, die Körnervereinzelungsvorrichtung nicht mehr unten an den Ausbringelementen, sondern zentral weiter oben, beispielsweise unter dem Speicherbehälter anzubringen und die vereinzelten Körner über druckluftbeaufschlagte Saatgutleitungen zu den Ausbringelementen zu transportieren. Solche Sämaschinen zeigen beispielsweise die Schriften EP 25 14 292 A1 oder die DE 103 13 180 A1, bei denen jeweils eine Körnervereinzelungsvorrichtung zentral unter dem Saatguttank angeordnet ist, von der dann druckluftbeaufschlagte Saatgutleitungen nach unten zu den Ausbringelementen führen.

Trotzdem kommt es bei Ausführungen solcher kombinierter Sämaschinen, bei denen die Drillsaatgutleitungen und die Einzelkornsaatgutleitungen am selben Ausbringelement münden, zu einer gegenseitigen Beeinträchtigung. Während die in Einzelkornablage einzeln auszubringenden Körner, die aus den zweiten Saatgutleitungen kommen, vorzugsweise in ausgeprägte Särillen abgelegt werden, um in einem definierten Breiten- und Längsabstand entsprechend einer gewünschten Körnermatrix abgelegt werden sollen, ist eine solche ausgeprägte Särille wenig sinnvoll bei Breit- oder Drillsaat, die gestreut abgelegt werden soll. Das aus den ersten Saatgutleitungen kommende Drillsaatgut neigt dann nämlich dazu, sich in den ausgeprägten Särillen zu sammeln und somit nicht breit gestreut verteilt zu werden.

Insofern wurde bereits angedacht, die zweiten Saatgutleitungen für die Einzelkornablage nicht an denselben Ausbringelementen münden zu lassen wie die ersten Saatgutleitungen für Drillsaatgut. Bei solchen Lösungen mit separaten Scharkörpern für die ersten und zweiten Saatgutleitungen kommt es jedoch wiederum zu Platzproblemen, da dann natürlich die Gesamtanzahl der Ausbringelemente größer wird. Insbesondere wird es schwierig, alle Ausbringelemente in einer Reihe anzuordnen, wenn diese entsprechend eng beabstandet sein sollen.

Der vorliegenden Erfindung liegt daher die Aufgabe zugrunde, eine verbesserte Sämaschine der genannten Art zu schaffen, die Nachteile des Standes der Technik vermeidet und Letzteren in vorteilhafter Weise weiterbildet. Insbesondere soll bei zwei an einem gemeinsamen Ausbringelement endenden Saatgutleitungen für Drillsaat einerseits und Einzelkornablage andererseits für beide Ausbringarten gleichermaßen günstige Ausbringbedingungen geschaffen werden, ohne dass sich die mehreren Saatgutleitungen an einem Ausbringelement gegenseitig behindern.

Erfindungsgemäß wird die genannte Aufgabe durch eine Sämaschine gemäß Anspruch 1 gelöst. Bevorzugte Ausgestaltungen der Erfindung sind Gegenstand der abhängigen Ansprüche.

Es wird also vorgeschlagen, den Scharkörper für die verschiedenen Ausbringmethoden umkonfigurierbar auszubilden, so dass der Scharkörper einerseits eine für die Einzelkornablage günstige Gestalt annehmen und die Säfurchen für die Einzelkornablage ausbilden kann und andererseits eine zweite Gestalt annehmen kann, die die Drill- bzw. Breitsaat nicht beeinträchtigt. Erfindungsgemäß umfassen die Scharkörper der Ausbringelemente, zu denen zwei Saatgutleitungen führen, für die zweiten Saatgutleitungen jeweils einen Furchenformer, der von einer Scharkörperbasis und/oder aus seiner Funktionsstellung entfernbar ausgebildet ist. Durch einen solchen entfernbaren Furchenformer kann der Scharkörper für die Einzelkornablage die gewünschte Säfurchen ziehen, andererseits aber entfernt werden, um die Drillsaatablage nicht zu behindern.

Dabei ist in den genannten entfernbaren Furchenformer ein Saatgutführungskanal integriert, der an die zweite Saatgutleitung anschließbar ist und/oder einen Abschnitt dieser Saatgutleitung bildet, wenn der genannte Furchenformer in seiner bestimmungsgemäßen Funktionsposition an der Scharkörperbasis sitzt. Insbesondere kann der am Furchenformer vorgesehene Saatgutführungskanal eine Verlängerung der zweiten Saatgutleitung bilden, die an dem zugehörigen Scharkörper endet, so dass durch die zweiten Saatgutleitungen transportierte, insbesondere vereinzelte Körner noch ein Stück weit durch den Führungskanal geleitet werden, der in den Furchenformer integriert ist, und präzise in der vom Furchenformer gezogenen Furche abgelegt werden können. Der Führungskanal im Furchenformer schließt an das Ende der Saatgutleitung an und setzt diese ein Stück weit fort, insbesondere schräg nach unten/hinten bezüglich der Fahrtrichtung, so dass Saatgutkörner sanft in die vom Furchenformer gezogene Furche gleiten. Der in den Furchenformer integrierte Saatgutführungskanal mündet vorteilhafterweise an einem hinteren und/oder unteren Endabschnitt des entfernbaren Furchenformers, so dass durch den integrierten Saatgutführungskanal transportierte Körner in die Bodenfurche gleiten, die von einem der Mündung des integrierten Führungskanals vorauslaufenden Furchenformerabschnitts gezogen wurde.

Die ersten und zweiten Saatgutleitungen, die an einem gemeinsamen Ausbringelement münden, können bezüglich des Scharkörpers grundsätzlich verschieden angeordnet sein. Erfindungsgemäß sind die genannten ersten und zweiten Saatgutleitungen an einem Ausbringelement hintereinander angeordnet, wobei die erste Saatgutleitung für Drillsaat oder Düngerausbringung vor der zweiten Saatgutleitung für Einzelkornablage angeordnet ist. Durch eine solche Hintereinanderanordnung der an einem Ausbringelement zusammengefassten Saatgutleitungen können enge Querabstände erreicht werden und eine ausreichend hohe Anzahl an Ausbringelementen auch in nur einer Reihe von Ausbringelementen angeordnet werden. Platzprobleme quer zur Fahrtrichtung können hierdurch gelöst werden, es kann eine schmale, kompakte Bauweise erreicht werden, bei der Kollisionen bei engen Scharkörperabständen vermieden werden können.

Dabei ist vorgesehen, dass die genannten ersten Saatgutleitungen für Drillsaat bzw. Düngerausbringung in Fahrtrichtung vor den entfernbaren Furchenformern angeordnet sind bzw. münden. Trotzdem stören die genannten Furchenformer die Drillsaatablage nicht, da sie für die Drillsaatablage entfernt werden können.

Dabei ist vorgesehen, dass die genannten ersten Saatgutleitungen oberhalb des entfernbaren Furchenformers enden bzw. einen oberhalb der Schnittstelle zwischen den Furchenformern und der Scharkörperbasis liegenden Mündungsbereich besitzen.

Der Furchenformer kann dabei grundsätzlich auf verschiedene Weise entfernbar ausgebildet sein. Nach einer vorteilhaften Ausführung der Erfindung kann der Furchenformer vom Scharkörper abbaubar und mit lösbaren Befestigungsmitteln an der jeweiligen Scharkörperbasis befestigbar sein, beispielsweise durch einen Schraubbolzen oder einen lösbaren Schnellverschluss, so dass der Furchenformer für das Ausbringen von Saatgut durch die ersten Saatgutleitungen abgenommen werden kann.

Alternativ zu einer solchen Abbaubarkeit kann der Furchenformer auch dadurch aus seiner Funktionsstellung entfernt werden, dass er an der jeweiligen Scharkörperbasis beweglich gelagert ist, insbesondere wegschwenkbar oder wegklappbar angelenkt ist, so dass er aus der bestimmungsgemäßen Funktionsstellung in eine Parkstellung oder Inaktivstellung verbracht werden kann, in der der Furchenformer den Saatgutaustrag aus den ersten Saatgutleitungen nicht stört. Auch bei einer solchen schwenkbar angelenkten Lagerung der Furchenformer können lösbare Befestigungsmittel vorgesehen sein, um den Furchenformer in seiner Funktionsstellung zu sichern. Als lösbare Befestigungsmittel können hierbei neben Schrauben auch andere Schnellspannmittel wie Spannhebel oder dergleichen Verwendung finden.

In vorteilhafter Weiterbildung der Erfindung bilden die Furchenformer in ihrer an der jeweiligen Scharkörperbasis befestigten Funktionsstellung einen unteren Endabschnitt und/oder einen tiefsten Punkt des jeweiligen Scharkörpers.

In Weiterbildung der Erfindung kann eine Trennebene zwischen den Furchenformer und der jeweiligen Scharkörperbasis oberhalb einer Bodenaufstandsfläche der Sämaschine, die beispielsweise durch eine nachlaufende Bodenwalze definiert sein kann, und/oder oberhalb der bestimmungsgemäßen Eindringtiefe einer an der Scharkörperbasis gelagerten Scharscheibe angeordnet sein. Vorteilhafterweise umfassen die Ausbringelemente drehbar gelagerte, optional spitzwinklig gegenüber der Vertikalen und/oder gegenüber der Fahrtrichtung verkippte Scharscheiben, die den Boden aufschneiden und für den Saatgutaustrag vorbereiten. Die genannten Scharscheiben können dabei an der genannten Scharkörperbasis gelagert sein, die nach unten hin durch die genannten Furchenformer für die Einzelkornablage verlängert werden kann.

Im angebauten Funktionszustand kann der entfernbare Furchenformer mit seinem unteren Endabschnitt bzw. seiner Unterseite etwa auf demselben Niveau angeordnet sein wie der untere Abschnitt der genannten Scharscheibe, vorteilhafterweise auch ein kleines Stück, beispielsweise einige mm oberhalb des tiefsten Punkts der Scharscheibe, jedoch noch unterhalb der bestimmungsgemäßen Eindringtiefe der Scharscheiben.

In Weiterbildung der Erfindung kann der entfernbare Furchenformer die Scharkörperbasis, an die der Furchenformer ansetzbar ist, in seiner Funktionsstellung bezüglich der Fahrtrichtung schräg geneigt nach hinten unten verlängern. Der Furchenformer bildet sozusagen eine Scharkörperverlängerung, die die Scharkörperbasis schräg nach hinten unten verlängert.

Zur weiteren Optimierung der verschiedenen Ausbringvarianten für das verschiedene Saatgut kann in Weiterbildung der Erfindung nachlaufend zum Furchenformer eine Fangrolle und/oder Andrückrolle vorgesehen sein, die das in Einzelkornablage abgelegte Korn in der vom Furchenformer gezogenen Bodenfurche fixiert oder andrückt und zumindest fängt, um ein Wegspringen zu verhindern. In vorteilhafter Weiterbildung der Erfindung kann die genannte Fangrolle unmittelbar nachlaufend zu dem genannten Furchenformer und/oder unmittelbar nachlaufend zu der Mündung der zweiten Saatgutleitung angeordnet sein, insbesondere derart, dass zwischen der genannten Fangrolle und dem Furchenformer bzw. der Mündung der zweiten Saatgutleitung nur ein relativ schmaler Spalt verbleibt. Das Spaltmaß kann hier im Bereich einiger mm liegen.

Die genannte Fangrolle ist dabei vom Durchmesser her ausreichend groß beschaffen und derart angeordnet, dass ein in Fahrtrichtung betrachtet vorderer, unterer Quadrant der Fangrolle unmittelbar hinter der Mündung der zweiten Saatgutleitung liegt, so dass das aus der Mündung der zweiten Saatgutleitung austretende Korn von der Fangrolle nach unten in die Bodenfurche gedrückt wird, die vom Furchenformer gezogen wird.

Die genannten Fangrollen sind dabei zumindest all denen Ausbringelementen zugeordnet, zu denen in der genannten Weise zwei separate Saatgutleitungen führen.

Um das Ausbringen von Drillsaat aus den ersten Saatgutleitungen nicht zu beeinflussen, kann in vorteilhafter Weiterbildung der Erfindung die genannte Fangrolle bzw. die mehreren Fangrollen aus der zuvor beschriebenen Funktionsstellung entfernbar ausgebildet sein. Die entfernbare Ausbildung kann hier wiederum in verschiedener Weise erreicht werden, beispielsweise durch eine abbaubare Ausbildung, so dass die Fangrolle gänzlich entfernt werden kann. Alternativ hierzu kann in vorteilhafter Weiterbildung der Erfindung auch vorgesehen sein, die Fangrolle wegbewegbar, insbesondere nach oben bewegbar zu lagern, so dass die Fangrolle für die Ausbringung von Drillsaat aus den ersten Saatgutleitungen nach oben gefahren werden kann, beispielsweise zumindest so weit nach oben, dass ein unterer Abschnitt der Fangrolle in dieser Nichtaktivstellung im Bereich der Schnittstelle zwischen den entfernbaren Furchenformern und den zugehörigen Scharkörperbasen liegt. In der bestimmungsgemäßen Funktionsstellung können die genannten Fangrollen mit ihrem tiefsten Punkt bzw. ihrer Unterseite etwa auf Höhe der Unterseite der vorauslaufenden Furchenformer und/oder etwa auf dem Niveau der zuvor erwähnten Scharscheiben angeordnet sein.

Die genannten ersten und zweiten Saatgutleitungen können vorteilhafterweise von separaten Speicherräumen her beschickt werden. Hierzu können zwei separate Saatgut- bzw. Düngertanks vorgesehen sein, oder auch ein Tank mit zwei separaten Speicherräumen. Grundsätzlich wäre es aber auch denkbar, die beiden Saatgutleitungen, d.h. die ersten und die zweiten Saatgutleitungen vom einem gemeinsamen Speicher her zu beschicken, wobei hier das jeweils auszubringende Saatgut ausgetauscht bzw. vorher entfernt werden müsste.

In vorteilhafter Weiterbildung der Erfindung sind dabei die zweiten Saatgutleitungen für die Einzelkornablage mit einer Körnervereinzelungsvorrichtung verbindbar, mit Hilfe derer die Körner vereinzelt und in einem vorbestimmten Längsabstand zueinander am jeweiligen Ausbringelement abgelegt werden können.

Eine solche Körnervereinzelungsvorrichtung kann grundsätzlich verschieden ausgebildet sein, beispielsweise pneumatisch oder mechanisch in Form eines umlaufenden Vereinzelungsrades oder umlaufender Vereinzelungsschaufeln, und unabhängig von der genannten Ausbildung an verschiedenen Orten bzw. Positionen an der Sämaschine angeordnet sein. Vorteilhaft ist es hierbei, dass die genannte Körnervereinzelungsvorrichtung von den Ausbringelementen beabstandet, vom Boden nach oben versetzt angeordnet ist, beispielsweise zentral unter einem Saatgutspeicher, aus dem die zweiten Saatgutleitungen beschickt werden. Durch eine solche nach oben gesetzte und/oder zentrale, von den Ausbringelementen beabstandete Anordnung der Körnervereinzelungsvorrichtung können Platzprobleme an den Ausbringelementen weiter vermieden werden.

Die Erfindung wird nachfolgend anhand eines bevorzugten Ausführungsbeispiels und zugehöriger Zeichnungen näher erläutert. In den Zeichnungen zeigen:

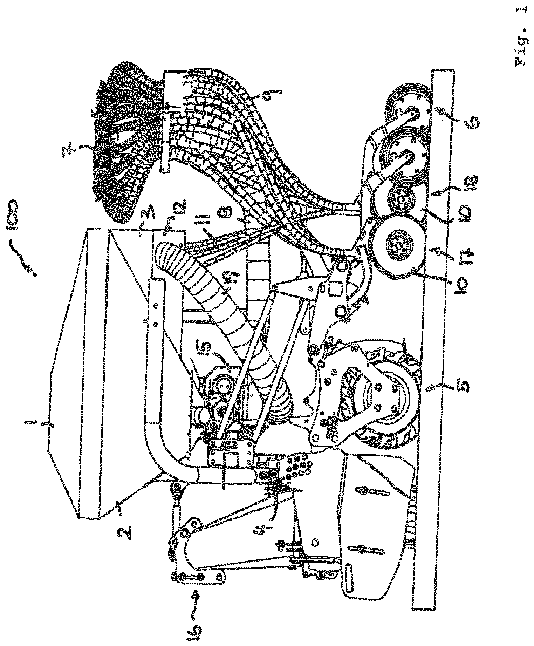

- Fig. 1:: eine schematische Seitenansicht einer Reihensämaschine nach einer vorteilhaften Ausführung der Erfindung, bei der eine im Bodenbereich eines Speichers angeordnete Körnervereinzelungsvorrichtung über druckluftbeaufschlagte Saatgutleitungen mit Ausbringelementen verbunden ist, und

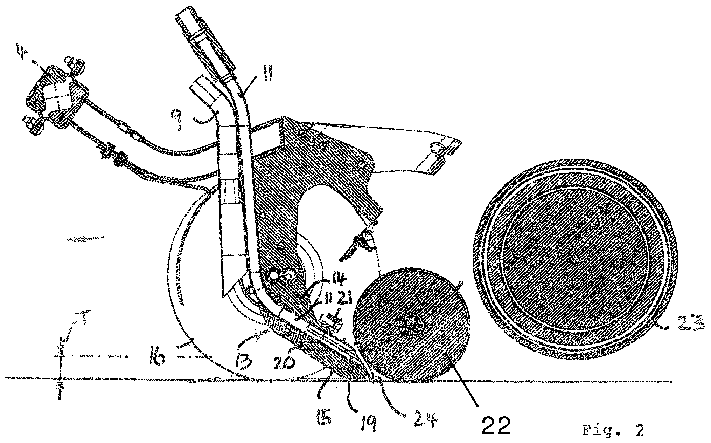

- Fig. 2:: eine schematische, teilweise geschnittene Seitenansicht eines Ausbringelements, an dem sowohl eine erste Saatgutleitung für Drillsaat- oder Düngerausbringung als auch eine zweite Saatgutleitung für Einzelkornablage vorgesehen ist, wobei am Scharkörper dieses Ausbringelements ein entfernbarer Furchenformer mit integrierter Verlängerung der zweiten Saatgutleitung montiert ist und eine dem Furchenformer nachlaufende Fangrolle in ihrer bestimmungsgemäßen Arbeitsstellung für Einzelkornablage dargestellt ist.

Wie Fig. 1 zeigt, kann die Sämaschine 100 sowohl eine Einzelkornablage- als auch eine Drillsaatfunktion besitzen bzw. eine Kombination aus Einzelkornsämaschine und Drillsaatmaschine bilden, was jedoch keineswegs zwingend ist. Die Sämaschine könnte auch als reine Einzelkornsämaschine ausgebildet sein.

Wie Fig. 1 zeigt, kann die Sämaschine 100 dabei als Anbaugerät ausgeführt sein, das in an sich bekannter Weise über einen Anbaubock 16 an einen Schlepper anbaubar sein kann. Auf einem mehrgliedrigen Maschinenrahmen 4 kann ein Speicherbehälter bzw. Tank 1 angeordnet sein, der zwei separate Speicherräume 2 und 3 umfassen kann, wobei aber auch zwei separate Tanks vorgesehen sein könnten.

Der Speicherraum 2, in dem Drillsaatgut wie beispielsweise Weizen oder Dünger gespeichert werden kann, beschickt über eine pneumatische Fördereinrichtung 15, die beispielsweise ein Gebläse umfassen kann, und eine Speiseleitung 8 einen Verteilerkopf 7, von dem aus das Drillsaatgut oder Dünger verteilt und über Verteilerleitungen 9 zu Ausbringelementen 10 geführt wird. Die Ausbringelemente 10 können geeignete Scharkörper umfassen, um das Saatgut in Furchen ablegen zu können. Wie Fig. 1 weiterhin zeigt, können den Ausbringelementen 10 vorauslaufend angeordnete Bodenaggregate 5 beispielsweise in Form eines Grubbers, einer Scheibenegge oder anderer den Boden vorbereitender Bodenbearbeitungswerkzeuge und/oder nachlaufende Bodenbearbeitungsaggregate 6 beispielsweise in Form von Andruckwalzen, Zustreichern oder dergleichen vorgesehen sein.

Die zuvor genannten Ausbringelemente 10 können in zumindest einer Reihe quer zur Fahrtrichtung voneinander beabstandet angeordnet sein, wobei in der gezeichneten Ausführungsform zwei Reihen 17 und 18 solcher Ausbringelemente hintereinander versetzt angeordnet sind, vgl. Fig. 1.

Von dem zweiten Speicherraum 3 des Tanks 1 wird Saatgut für die Einzelkornablage ausgegeben, wobei hierfür am Bodenbereich des Speicherraums 2 bzw. ein Stück unterhalb des Speicherraums 3 eine Körnervereinzelungsvorrichtung 12 vorgesehen ist, von der aus vereinzelte Körner über Saatgutleitungen 11 zu den am Boden laufenden Ausbringelementen 10 transportiert werden. Die genannten Saatgutleitungen 11 für die Einzelkornablage können zu einigen der genannten Ausbringelementen 10 oder auch zu allen der Ausbringelementen 10 führen oder auch zu zusätzlichen Ausbringelementen führen, die vom Verteilerkopf 7 her nicht beschickbar sind. Zu zumindest einigen der Ausbringelementen 10 führen dabei sowohl erste Saatgutleitungen 9 als auch zweite Saatgutleitungen 11, d.h. an einem jeweiligen Ausbringelement 10 endet einerseits eine erste Saatgutleitung 9 für Drillsaat oder Düngerausbringung und eine zweite Saatgutleitung 11 für Einzelkornablage.

Wie die Figuren zeigen, kann auch der Transport durch die Saatgutleitungen 11 für die Einzelkornablage pneumatisch erfolgen. Von der pneumatischen Fördereinrichtung 15 beispielsweise in Form eines Gebläses oder auch einer anderen Drucklufterzeugereinheit wird Druckluft über eine Druckluftzufuhrleitung 19 zu den Saatgutleitungen 11 geführt, die mit den Ausgängen der Körnervereinzelungsvorrichtung 12 verbunden sind. Dabei werden die von der Körnervereinzelungsvorrichtung 12 vereinzelten Körner über ein Injektorelement in den Druckluftstrom durch die Saatgutleitungen 11 eingespeist bzw. daran übergeben.

Die Körnervereinzelungsvorrichtung 12 kann vorteilhafterweise verschieden ausgebildet sein und beispielsweise pneumatisch oder mechanisch arbeiten, beispielsweise in Form einer Zellenradschleuse ausgebildet sein oder das Saatgut auch pneumatisch vereinzeln. Beispielsweise kann die Körnervereinzelungsvorrichtung 12 umlaufende Vereinzelungsschaufeln umfassen, die die über einen Einlass aus dem Speicherraum 3 zugeführten Körner vereinzeln und eine aufrechte Umlaufbahn überstreichen.

Wie Fig. 1 zeigt, kann die Körnervereinzelungsvorrichtung 12 vom Boden beabstandet nach oben gesetzt sein, insbesondere unmittelbar unter dem Tank 1 positioniert sein. Die Saatgutleitungen 11 können dementsprechend mehr oder minder lang ausgebildet sein, beispielsweise Längen von 0,5 m oder mehr besitzen.

Wie Fig. 2 zeigt, kann ein jeweiliges Ausbringelement 10 einen Scharkörper 13 umfassen, dessen Scharkörperbasis 14 sich vom Maschinenrahmen 4 bzw. einem damit verbundenen Träger nach unten erstreckt. An der genannten Scharkörperbasis 14 kann eine Scharscheibe 16 drehbar gelagert sein, die insgesamt betrachtet aufrecht ausgerichtet ist, gegenüber der Vertikalen und/oder gegenüber einer Fahrtrichtungshorizontalen spitzwinklig verkippt sein kann, wie dies an sich für Scharscheiben bekannt ist. Die Drehachse der Scharscheibe 16 erstreckt sich - ganz grob gesprochen - quer zur Fahrtrichtung.

Von der unterhalb der Drehachse der Scharscheibe 16 endenden Scharkörperbasis 14 erstreckt sich ein Furchenformer 15 weiter nach unten zum Boden hin, wobei der genannte Furchenformer 15 die Scharkörperbasis 14 in Fahrtrichtung schräg nach hinten unten fortsetzt bzw. verlängert und insofern eine Scharkörperverlängerung bildet. Ein unterer Endabschnitt des genannten Furchenformers 15 kann sich etwa auf dem Niveau erstrecken, das durch die Unterseite der Scharscheibe 16 definiert ist, gegebenenfalls geringfügig höher angeordnet sein, wie dies Fig. 2 zeigt. Der Furchenformer 15 ist derart ausgebildet, dass er eine Särille bzw. -furche in den Boden zieht bzw. drückt, in die dann in Einzelkornablage auszusäende Körner abgelegt werden können. Der genannte untere Endabschnitt des Furchenformers 15 und/oder die Unterseite der Scharscheibe 16 befinden sich in Arbeitsstellung ein Stück weit unterhalb des Bodenaufstandsniveaus der Sämaschine 100, das durch die Unterseite der Nachlaufwalze 23 bestimmt sein kann.

Wie Fig. 2 zeigt, endet die vorgenannte zweite Saatgutleitung 11 für die Einzelkornablage an einem hinteren Endabschnitt des genannten Furchenformers 15, insbesondere geringfügig oberhalb von dessen Unterseite. Insbesondere kann ein Teil, insbesondere ein zur Leitungsmündung führender Endabschnitt der zweiten Saatgutleitung 11, in den Furchenformer 15 integriert sein, vgl. Fig. 2. Die zweite Saatgutleitung 11 erstreckt sich zu ihrem Ende hin vorteilhafterweise ebenfalls leicht schräg nach hinten unten, ähnlich wie der Furchenformer 15, beispielsweise unter einem Neigungswinkel von etwa 20° bis 60°, insbesondere etwa 20° bis 40° zur Horizontalen.

Zu demselben Ausbringelement 10 führt die erste Saatgutleitung 9. Wie Fig. 2 zeigt, kann diese erste Saatgutleitung 9 in Fahrtrichtung vor der zweiten Saatgutleitung 11 und/oder vor dem Furchenformer 15 angeordnet sein, wobei ein Mündungsbereich der ersten Saatgutleitung 9 oberhalb des Mündungsbereiches der zweiten Saatgutleitung 11, insbesondere auch oberhalb des Furchenformers 15 angeordnet sein kann. Bei dem in Fig. 2 gezeigten Beispiel endet die erste Saatgutleitung 9 etwa auf Höhe der Drehachse der Scharscheibe 16.

Dementsprechend kann an demselben Ausbringelement 10 sowohl Drillsaatgut, Dünger als auch Einzelkornsaatgut abgelegt werden.

Der genannte Furchenformer 15 ist an der Scharkörperbasis 14 lösbar befestigt, so dass der Furchenformer 15 aus der in Fig. 2 gezeigten Funktionsstellung entfernt werden kann. Hierzu können beispielsweise lösbare Befestigungsmittel 21, beispielsweise in Form zumindest einer Befestigungsschraube gelöst werden.

Der Furchenformer 15 kann entweder ganz von der Scharkörperbasis 14 abgenommen werden, oder ggf. durch schwenkbare oder in anderer Weise bewegliche Lagerung nach oben wegbewegt werden, so dass er nicht mehr mit dem Boden in Eingriff gerät und keine Särillen mehr in den Boden zieht.

Wie Fig. 2 zeigt, liegt die Trennebene 20 zwischen Furchenformer 15 und Scharkörperbasis 14 ein Stück weit oberhalb der Eindringtiefe T der Scharscheibe 16, jedoch noch ein Stück weit unterhalb des Anlenkpunktes der Scharscheibe 16 an die Scharkörperbasis 14.

Wird die Sämaschine 100 als Einzelkornsämaschine betrieben und Saatgut über die zweiten Saatgutleitungen 11 ausgebracht, werden die aus den zweiten Saatgutleitungen 11 austretenden Körner durch eine Fangrolle 22 in die vom Furchenformer 15 gezogene Särille gedrückt. Diese Fangrolle 22 läuft vorteilhafterweise unmittelbar hinter dem Mündungsbereich der zweiten Saatgutleitung 11, vgl. Fig. 2, und kann vorteilhafterweise so groß ausgebildet sein, dass die Mündung der zweiten Saatgutleitung 11 einem vorderen, unteren Quadranten der Fangrolle 22 gegenüberliegt, so dass die austretenden Körner gefangen und nach unten gedrückt werden. Wie Fig. 2 zeigt, verbleibt nur ein Austrittsspalt 24 von beispielsweise wenigen mm zwischen Fangrolle 22 und der Mündung der zweiten Saatgutleitung 11.

Die Fangrolle 22 kann ebenfalls entfernbar ausgebildet sein, beispielsweise nach oben verfahrbar gelagert sein, um beim Ausbringen von Drillsaatgut über die ersten Saatgutleitungen 9 vom Boden außer Eingriff zu sein.

## Patentansprüche

1. Sämaschine mit zumindest einer Reihe (17; 18) von Ausbringelementen (10), die jeweils einen Scharkörper (13) zum Einbringen einer Särille in den Boden umfassen, wobei zu zumindest einigen der Ausbringelemente (10) jeweils zumindest zwei separate Saatgutleitungen (9; 11) führen, von denen eine erste Saatgutleitung (9) mit Drillsaatgut und/oder Dünger beschickbar ist und eine zweite Saatgutleitung (11) mit einer Körnervereinzelungsvorrichtung (12) verbunden und mit Einzelkornsaatgut beschickbar ist, wobei die Scharkörper (13) der zumindest einigen Ausbringelemente (10) für die zweiten Saatgutleitungen (11) jeweils einen Furchenformer (15) umfassen, der von einer Scharkörperbasis (14) lösbar und/oder aus seiner Funktionsstellung entfernbar ausgebildet ist, **dadurch gekennzeichnet, dass** der entfernbare Furchenformer (15) einen Saatgutführungskanal (19) umfasst, der einen Abschnitt der zweiten Saatgutleitung (11) bildet, wobei die erste Saatgutleitung (9) in Fahrtrichtung vor dem entfernbaren Furchenformer (15) angeordnet ist und oberhalb des Furchenformers (15) endet/mündet und die Körnervereinzelungsvorrichtung (12) oberhalb beabstandet von den am Boden laufenden Ausbringelementen (10) angeordnet ist.

2. Sämaschine nach dem vorhergehenden Anspruch, wobei der Furchenformer (15) in seiner Funktionsstellung einen unteren Endabschnitt und/oder den tiefsten Punkt des Scharkörpers (13) bildet.

3. Sämaschine nach einem der vorhergehenden Ansprüche, wobei eine Trennebene (20) zwischen dem Furchenformer (15) und der Scharkörperbasis (14) oberhalb der Bodenaufstandsfläche der Sämaschine und/oder oberhalb der bestimmungsgemäßen Eindringtiefe (T) einer an der Scharkörperbasis (14) gelagerten Scharscheibe (16) angeordnet ist.

4. Sämaschine nach einem der vorhergehenden Ansprüche, wobei der Furchenformer (15) die Scharkörperbasis (14) in seiner Funktionsstellung bezüglich der Fahrtrichtung schräg geneigt nach hinten und unten verlängert.

5. Sämaschine nach einem der vorhergehenden Ansprüche, wobei der Furchenformer (15) von der Scharkörperbasis (14) abbaubar ausgebildet und mit lösbaren Befestigungsmitteln (21) an der Scharkörperbasis (14) befestigbar ist.

6. Sämaschine nach einem der vorhergehenden Ansprüche, wobei der Furchenformer (15) an der Scharkörperbasis (14) beweglich gelagert, insbesondere wegschwenkbar gelagert ist.

7. Sämaschine nach einem der vorhergehenden Ansprüche, wobei zumindest zwei separate Speicherbehälter zum Speichern von Saatgut und/oder Dünger vorgesehen sind, wobei die ersten Saatgutleitungen (9) mit einem ersten Speicherbehälter verbindbar und die zweiten Saatgutleitungen mit einem zweiten Speicherbehälter verbindbar sind.

8. Sämaschine nach einem der vorhergehenden Ansprüche, wobei zumindest eine Fangrolle (22) vorgesehen ist, die dem Furchenformer (15) nachlaufend angeordnet ist derart, dass aus der zweiten Saatgutleitung kommende Körner gefangen und/oder in die vom Furchenformer (15) gezogene Bodenfurche gedrückt werden.

9. Sämaschine nach dem vorhergehenden Anspruch, wobei die zumindest eine Fangrolle (22) aus ihrer Funktionsstellung entfernbar ausgebildet ist, insbesondere abbaubar und/oder nach oben wegfahrbar ausgebildet ist.

10. Sämaschine nach einem der beiden vorhergehenden Ansprüche, wobei die zumindest eine Fangrolle in ihrer Funktionsstellung mit einem in Fahrtrichtung betrachtet vorderen, unteren Quadranten einer Mündungsöffnung der zweiten Saatgutleitung (11) gegenüberliegend angeordnet ist.

## Claims

1. A seeder having at least one row (17; 18) of discharge elements (10) that each comprise a coulter body (13) for introducing a sowing furrow into the ground, wherein a respective at least two separate seed lines (9; 11) lead to at least some of the discharge elements (10), of which seed lines at least one first seed line (9) can be fed with drill seeds and/or fertilizer and one second seed line (11) is connected to a grain separation apparatus (12) and can be fed with single grain feed, wherein the coulter bodies (13) of the at least some discharge elements (10) for the second seed lines (11) each comprise a furrow former (15) that is configured as releasable from a coulter body base (14) and/or as removable from its functional position,
**characterized in that**
the removable furrow former (15) comprises a seed guide passage (19) that forms a section of the second seed line (11), with the first seed line (9) being arranged in front of the removable furrow former (15) in the direction of travel and ending/opening above the furrow former (15), and with the grain separation apparatus (12) being arranged above and spaced apart from the discharge elements (10) running at the ground.

2. A seeder in accordance with the preceding claim, wherein the furrow former (15) forms a lower end section and/or the lowest point of the coulter body (13) in its functional position.

3. A seeder in accordance with one of the preceding claims, wherein a separation plane (20) is arranged between the furrow former (15) and the coulter body base (14) above the ground contact area of the seeder and/or above the intended penetration depth (T) of a coulter disk (16) supported at the coulter body base (14).

4. A seeder in accordance with one of the preceding claims, wherein the furrow former (15) extends the coulter body base (14) obliquely rearwardly and downwardly in its functional position with respect to the direction of travel.

5. A seeder in accordance with one of the preceding claims, wherein the furrow former (15) is configured as dismantlable from the coulter body base (14) and is fastenable to the coulter body base (14) by releasable fastening means (21).

6. A seeder in accordance with one of the preceding claims, wherein the furrow former (15) is movably supported at the coulter body base (14) and is in particular supported in a manner pivotable away.

7. A seeder in accordance with one of the preceding claims, wherein at least two separate storage containers are provided for storing seeds and/or fertilizer, with the first seed lines (9) being connectable to a first storage container and with the second seed lines being connectable to a second storage container.

8. A seeder in accordance with one of the preceding claims, wherein at least one catching roller (22) is provided that is arranged trailing the furrow former (15) such that grains coming from the second seed line are captured and/or are pressed into the ground furrow drawn by the furrow former (15).

9. A seeder in accordance with the preceding claim, wherein the at least one catching roller (22) is configured as removable from its functional position and is in particular configured as dismantlable and/or as upwardly movable away.

10. A seeder in accordance with one of the two preceding claims, wherein a lower quadrant of the at least one catching roller at the front considered in the direction of travel is arranged in its functional position opposite an orifice opening of the second seed line (11).

## Revendications

1. Semoir comprenant au moins une rangée (17 ; 18) d'éléments de mise en terre (10), qui comprennent respectivement un corps de soc (13) pour produire un sillon d'ensemencement dans le sol, dans lequel au moins deux conduites de semences (9 ; 11) séparées conduisent respectivement à au moins quelques-uns des éléments de mise en terre (10), dont une première conduite de semences (9) peut être alimentée en semences à semer en ligne et/ou en engrais et une seconde conduite de semences (11) peut être reliée à un dispositif de séparation des graines (12) et alimentée en semences en graines individuelles, les corps de soc (13) des au moins quelques éléments de mise en terre (10) pour les secondes conduites de semences (11) comprenant respectivement un dispositif de formation de sillon (15) qui est réalisé de manière à pouvoir être détaché d'une base de corps de soc (14) et/ou retiré de sa position de fonctionnement,
**caractérisé en ce que**
le dispositif de formation de sillon (15) détachable comprend un canal de guidage de semences (19), qui forme une section de la seconde conduite de semences (11), la première conduite de semences (9) étant disposée, dans le sens de la marche, devant le dispositif de formation de sillon (15) détachable et se terminant/débouchant au-dessus du dispositif de formation de sillon (15) et le dispositif de séparation des graines (12) étant disposé au-dessus à une distance des éléments de mise en terre (10) roulant sur le sol.

2. Semoir selon la revendication précédente, dans lequel
le dispositif de formation de sillon (15) forme, dans sa position de fonctionnement, une section d'extrémité inférieure et/ou le point le plus bas du corps de soc (13).

3. Semoir selon l'une des revendications précédentes, dans lequel un plan de séparation (20) entre le dispositif de formation de sillon (15) et la base de corps de soc (14) est disposé au-dessus de la surface de contact au sol du semoir et/ou au-dessus de la profondeur de pénétration (T) conforme au règlement d'un disque de charrue (16) monté sur la base de corps de soc (14).

4. Semoir selon l'une des revendications précédentes, dans lequel le dispositif de formation de sillon (15), dans sa position de fonctionnement, prolonge la base de corps de soc (14) de manière inclinée en biais vers l'arrière et vers le bas par rapport au sens de la marche.

5. Semoir selon l'une des revendications précédentes, dans lequel le dispositif de formation de sillon (15) est réalisé de manière démontable de la base de corps de soc (14) et peut être fixé à la base de corps de soc (14) par des moyens de fixation (21) libérables.

6. Semoir selon l'une des revendications précédentes, dans lequel le dispositif de formation de sillon (15) est monté mobile sur la base de corps de soc (14), en particulier monté de manière à pouvoir être écarté par pivotement.

7. Semoir selon l'une des revendications précédentes, dans lequel au moins deux réservoirs de stockage séparés sont prévus pour stocker des semences et/ou de l'engrais, les premières conduites de semences (8) pouvant être reliées à un premier réservoir de stockage et les secondes conduites de semences pouvant être reliées à un second réservoir de stockage.

8. Semoir selon l'une des revendications précédentes, dans lequel au moins un rouleau de retenue (22) est prévu, qui est disposé en aval du dispositif de formation de sillon (15) de telle manière que des graines sortant de la seconde conduite de semences sont recueillies et/ou enfoncées dans le sillon dans le sol formé par le dispositif de formation de sillon (15).

9. Semoir selon la revendication précédente, dans lequel l'au moins un rouleau de retenue (22) est réalisé de manière à pouvoir être retiré de sa position de fonctionnement, en particulier réalisé de manière à pouvoir être démonté et/ou écarté par déplacement vers le haut.

10. Semoir selon l'une des deux revendications précédentes, dans lequel l'au moins un rouleau de retenue, dans sa position de fonctionnement, est disposé, vu dans le sens de la marche, avec un quart de cercle inférieur avant en face d'une embouchure de la seconde conduite de semences (11).
